# EUROPEAN PATENT APPLICATION

(11) **EP 4 033 116 A1**
(43) Date of publication of application: **27.07.2022**
(21) Application number: 21197625.3
(22) Date of filing: 20.09.2021
(51) Int. Cl.: F16F 9/02, F16F 9/32

(54) **GAS SPRING WITH INTEGRATED SENSOR**

(30) Priority: 21.01.2021 ES 202130090 U
(71) Applicant: Azol-Gas, S. L., 01015 Vitoria, Álava (ES)
(72) Inventor: Dominguez Chamorro, Javier, 01015 Vitoria (ES); Díaz de Guereñu Ramos, Edorta, 01015 Vitoria (ES); Alejos Pérez, Oscar, 01015 Vitoria (ES)
(74) Representative: Izquierdo Blanco, Maria Alicia

(57) **Abstract**

Gas spring (1) with integrated sensor (2) consisting of a movable piston (1a), a gas chamber (1b) and a cylinder (1c), further consisting of a measurement duct (1e) linked to the gas chamber (1b) and capable of incorporating an integrated sensor (2) which in turn is housed in the fixing cavity (4) of the base wall (1d) of the cylinder (1c) and consisting of the integrated sensor (2) of a sealed meter (2a) and a connector (3) capable of being linked with the communication cable (8).

## Description

### Field of the Invention

This invention relates to a gas spring with integrated sensor. More specifically, it refers to a gas spring with an integrated sensor for general use in the field of measurement of industrial process variables structured on the basis of a gas chamber, a cylinder and a movable piston.

In current industrial processes, it is increasingly necessary to control all the variables of the process to ensure their stability and the quality of the final product. The arrival of Industry systematics 4.0 has meant that a large amount of data begins to be collected from a multiplicity of process sensors, and, through the analysis of this Big Data, rules of action can be established in real time, including the automation of some stages, which also affects the sector of diemaking and metal stamping in which gas springs are used. Gas springs are elements comprised of a gas chamber, in which nitrogen gas is incorporated under pressure, and a piston which moves linearly inside it and which are used to raise or lower loads. Depending on the temperature and working pressure to which the gas is subjected inside the gas chamber, a percentage of increase or reduction must be considered on the force that the gas spring must have, which means that it is fundamental that these variables be controlled.

The sector most influenced by the incorporation of gas springs is the sheet metal stamping sector. In this sector, gas springs play an important role in sheet metal deformation processes, measuring variables, through sensors, such as pressure and temperature of the nitrogen gas located inside a chamber at a high pressure, usually up to 300 bars. So far, these sensors are incorporated into the gas spring externally away from the measurement source and occupying space in the die without being protected in a proper manner, which meant exposing said sensor to damage during the production process or that data collection was unreliable, since, being attached externally to the gas spring, they do not come into direct contact with the measurement source.

For this reason, having gas springs that integrate the sensors themselves is very important, and it is also very convenient for them to have an arrangement of sensors that allows data measurement to be reliable and fast, and that the integrity of the sensors themselves during the industrial process not be impaired, keeping the entire reading system airtight to avoid gas leaks, since otherwise it would mean loss of work force, as well as the invalidation of the gas spring.

### Prior state of the art

In the current state of the art, gas springs of the type structured on the basis of a cylinder, a movable piston and a gas chamber are known, which incorporate sensors for the external measurement of different variables (pressure, temperature, position, etc.) and place them in the dies or adjacent to the gas spring. This causes said sensors to occupy space in the die in which they are to be used and that they are susceptible to being exposed to knocks, making them damaged and unusable. There is a known gas spring execution in which the sensors are located inside the gas chamber without communicating with the outside, since it stores the information inside so that, to extract the collected information, it is necessary to disassemble the gas spring and remove the measurement sensor by connecting it to an external device capable of reading the collected information. This configuration reduces the space for housing the gas, this being a drawback that is solved by the present invention, which places the sensor in the locking recess of the base wall of the cylinder, resulting in increased working capacity and protection thereof. Therefore, it has a great technical advantage with respect to what has been disclosed, which places the sensors tightly inside the cylinder walls, which means that they do not occupy space in the die, saving space and material, being protected and watertight due to the structure of the gas spring itself and that, by placing the sensors close to the measurement source, the records of the variables are performed reliably.

Furthermore, the present invention allows wireless implementation for data transmission and communication from the gas spring to the external computer system or central data unit by incorporating a wireless unit connected to the communication cable in the sensor itself. This does not require manipulation when inserting or removing the die from the press or the use of communication through an internal connector, that is, a versatile, economical and reliable communication system.

In view of what has been described, it is essential to have a gas spring that covers the deficiencies of currently known gas springs, guaranteeing the tightness and integrity of all its components, as well as the reliability in the measurement of the variables to be recorded and the integrity of the sensor and connector.

### Explanation of the invention and advantages

Compared to the state of the art described above, the object of the present invention is a gas spring with an integrated sensor consisting of a movable piston, a gas chamber and a cylinder consisting of a measurement duct linked to the gas chamber and capable of incorporating an integrated sensor that in turn is housed in the fixing cavity of the base wall of the cylinder and the integrated sensor consists of a sealed meter and a connector capable of being linked to the communication cable.

Thanks to this configuration, a direct connection is established with the source of the pressure and temperature variables, the latter being one of the most important to avoid heat dissipation, as the gas spring consists of a measurement duct linked to the gas chamber, thus achieving greater reliability in the measurement. Another characteristic advantage of the use of this measurement duct is that both the filling and the measurement of the gas chamber take place through a single point in contact with the gas chamber, which means that the chamber will have a single possible leak point, limiting and better controlling possible gas leaks from the chamber. Obviously, this element, the measurement duct, is easily replaceable in the event that it suffers any damage or deterioration, resulting in cost savings since complete replacement of the whole gas spring assembly or its chamber is not necessary. Furthermore, since the integrated sensor is housed in the fixing cavity of the base wall of the cylinder, the integrated sensor itself does not occupy space in the gas chamber, increasing the volume meant to house the nitrogen gas and thus raising and, therefore, improving the working capacity and performance of the gas spring. On the other hand, the fact of housing the integrated sensor in the fixing cavity of the base wall of the cylinder implies that it is not necessary to install it in the die itself, occupying space and being exposed to damage that may impair the integrity of the sensor itself and, therefore, the latter is protected by the structure of the gas spring and its cylinder, and that in case of adapting this configuration to other designs of gas springs, which consist of a cylinder, a movable piston and a gas chamber, it is only necessary to modify a single area of the gas spring to include this integrated sensor and connector, which gives this invention high adaptability. Also, the configuration of the present invention allows the integrated sensor to be easily removable, both for replacement or maintenance. On the other hand, because the present invention presents an integrated sensor connector capable of being linked with the communication cable, the gas spring is endowed with greater versatility, since it allows connection with the central data unit or any other data extraction system that is external to the gas spring.

Another advantageous aspect of the present invention is that the sealed meter comprises at least one housing cavity capable of inserting at least one sealing element. Thanks to the incorporation of sealing elements, it is possible to completely seal the integrated sensor against possible leaks, leaving it housed in a watertight manner in the cavity for fixing the gas spring, causing direct contact of the pressure sensor with the gas and avoiding particles, liquids or any substance that may be harmful to the correct operation of the sensor entering the sensor area. Both the dimensions and the number of sealing elements will be determined based on the size of the gas spring and its integrated sensor to provide a correct seal.

An additional advantage of the gas spring of the present invention is that the connector linked to the communication cable is capable of connection with the central data unit. Thanks to this execution, the communication system is economical and reliable and the sampling rate in the data collection during the measurement is adaptable to any working condition.

Another advantageous feature is that the connector linked to the communication cable is capable of connection with the wireless unit. The use of this execution does not require manipulation by the user when introducing or extracting the die from the press each time the extraction and subsequent analysis of the data of the measured variables is required, ensuring the integrity of the user. It also allows portability and adaptation of the wireless unit to the conditions of work space, so it gives the present invention a high versatility.

Lastly, the fixing cavity of the base wall of the cylinder is capable of housing a fixing ring. This fixing ring achieves additional security for a correct and efficient accommodation of the sensor integrated in the fixing cavity, avoiding unintentional detachment of the sensor.

### Drawings and References

In order to better understand the nature of the invention, an arrangement is presented by way of example in the accompanying drawings which is merely illustrative and non-limiting.

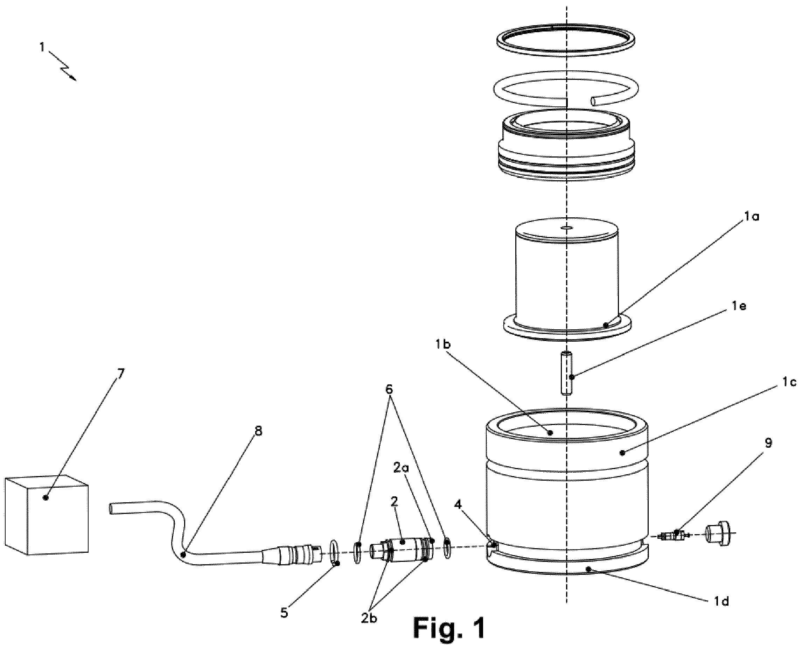

Figure 1 represents an exploded perspective view of the gas spring (1) in which the cylinder (1c) is shown in which the movable piston (1a) and the measurement duct (1a) that will be axially housed inside the gas chamber (1b) in connection with the gas chamber (1b). In addition, the integrated sensor (2) is shown together with the sealed meter (2a) that will be housed and watertight inside the housing cavity (4) located in the base wall (1d) of the cylinder (1c), through the possible threaded walls (4a), and by means of the fixing ring (5) and the sealing elements (6). In turn, the communication cable (8) is shown in contact with the outside and that will be linked to the integrated sensor (2), through the connector (3), and linked to the central data unit (7). Lastly, the filling valve (9) is presented through which the gas will be introduced into the gas chamber (1b) through the measurement duct (1e).

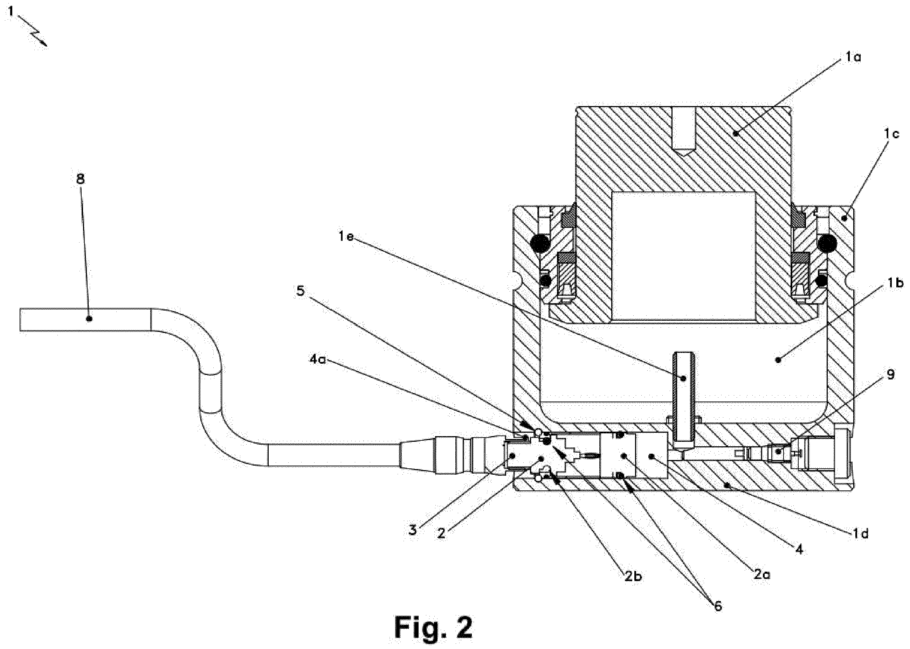

Figure 2 represents a longitudinal section view of the gas spring (1) in which it is shown how the movable piston (1a) and the measurement duct (1e) are axially housed inside the gas chamber (1b) of the cylinder (1c). It also shows how the integrated sensor (2) is housed together with the sealing gauge (2a) and tightly inside the fixing cavity (4) located on the base wall (1d) of the cylinder (1c) thanks to to the fixing ring (5), the sealing elements (6) that are housed in the housing cavity (2b) and the possible threaded walls (4a). In addition, the connection is shown through the connector (3) of the integrated sensor (2) with the communication cable (8) that in turn will connect either with the central data unit (7) or with the wireless unit (10) (not shown).

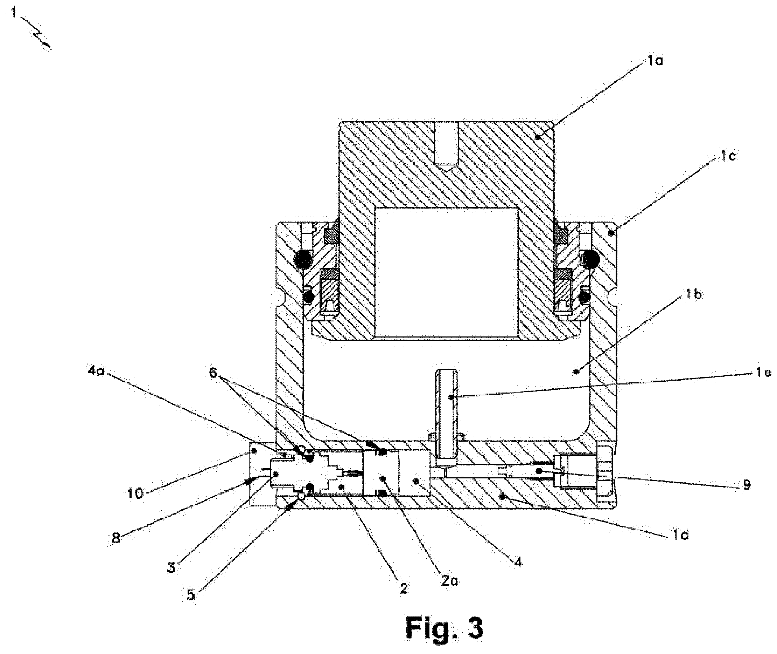

Figure 3 is a longitudinal sectional view of the gas spring (1) in which the wireless integrated sensor (2) is shown via the connector (3) and communication cable (8), to the wireless unit (10).

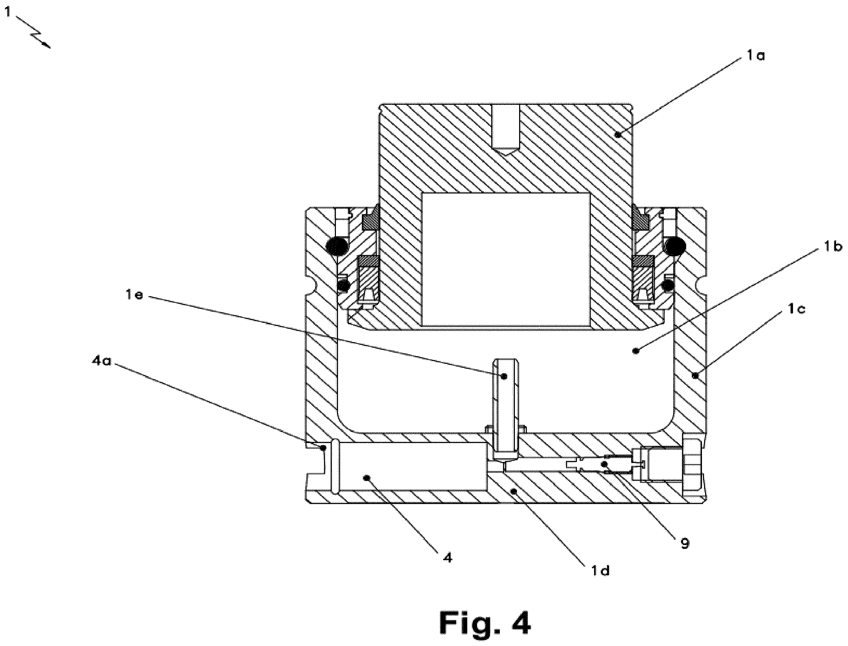

Figure 4 represents a longitudinal section view of the gas spring (1) showing the fixing cavity (4) located in the base wall (1d) of the cylinder (1c) in which the integrated sensor will be axially housed (2) (not shown) through the possible threaded walls (4a).

The following references are indicated in these figures:
1. Gas spring.
   1a. Movable plunger
   1b. Gas chamber
   1c. Cylinder
   1d. Cylinder base wall (1c)
   1e. Measuring duct
2. Integrated sensor
   2a. Sealed meter
   2b. Housing cavity
3. Connector
4. Fixing cavity
   4a. Threaded walls
5. Fixing ring
6. Sealing elements
   6a. O-rings
   6b. Elastic membrane
7. Central data unit
8. Communication cable
9. Filling valve
10. Wireless unit

### Presentation of a preferred embodiment

With reference to the above-listed drawings and references, a preferred embodiment of the object of the invention is illustrated in the attached drawings referred to a gas spring (1) with integrated sensor (2) consisting of a movable piston (1a), a gas chamber (1b) and a cylinder (1c) consisting of a measuring duct (1e) linked to the gas chamber (1b) and capable of incorporating an integrated sensor (2) which in turn is housed in the fixing cavity (4) of the base wall (1d) of the cylinder (1c) and the sensor integrated (2) consisting of a sealed meter (2a) and a connector (3) capable of being linked with the communication cable (8).

As can be seen in figure 1, the measurement duct (1e) is in contact with the gas chamber (1b) and the integrated sensor (2) housed in the base wall (1d) of the cylinder (1c), which means that their protection is optimal and in the event of any damage or maintenance required, these would be easily replaceable since they are removable, resulting in cost savings since it is not necessary to completely replace the entire gas spring assembly (1). In addition, the gas spring (1) allows connection to the central data unit (7) or any other data extraction system external to the gas spring, thanks to the fact that the connector (3) of the integrated sensor (2) is liable to be linked with the communication cable (8), thus providing the gas spring (1) of the present invention with greater connectivity versatility.

An additional advantage that can be seen in figure 1 is that the connector (3) linked to the communication cable (8) is capable of connection with the central data unit (8), which makes the communication system economical and reliable and the Sampling speed in data collection during measurement is adaptable to any working condition.

As can be seen in figure 2, as the gas spring (1) consists of a measurement duct (1e) linked to the gas chamber (1b), greater reliability is achieved in the measurement of variables by means of the sealed meter (2a) in which a pressure gauge for recording the pressure and a thermocouple for measuring the temperature are incorporated. This is due to the fact that thanks to the configuration in which the measurement duct (1e) establishes a direct connection with the gas chamber (1b), the source of the pressure and temperature variables, the latter being one of the most important to avoid heat dissipation, greater reliability is achieved in the measurement. Another characteristic advantage of the use of this measurement duct (1e) is that a single point of possible leakage of the gas chamber (1b) is established and through this point the filling and measurement of the chamber (1b) take place, optimizing and guaranteeing its correct operation. Likewise, the integrated sensor (2) does not occupy space inside the gas chamber (1b) as it is integrated into the base wall (1d) of the cylinder (1c), increasing the volume meant to house the nitrogen gas and therefore, improving the working capacity and performance of the gas spring (1), due to the fact that the integrated sensor (2) is housed in the fixing cavity (4). Another advantage that can be seen in figure 2 is that the integrated sensor (2) is protected by the structure of the gas spring (1) thanks to the fact that the integrated sensor (2) is housed inside the fixing cavity (4) of the base wall (1d) of the cylinder (1c), not being necessary to install it in the die itself, occupying space and being exposed to damage that could impair the integrity of the integrated sensor (2) itself, and in case of adapting this configuration to pre-existing designs of gas springs (1), which consist of a movable piston (1a), a gas chamber (1b) and a cylinder (1c), their incorporation is allowed by modifying a single zone of the gas spring (1) which endows this invention with high adaptability. Another advantageous characteristic that can be seen in figure 2 is that thanks to the incorporation of sealing elements (6), the integrated sensor (2) is sealed, leaving it housed in a watertight manner in the fixing cavity (4), also represented in figure 4, of the gas spring (1) causing a direct contact of the pressure sensor (2) with the gas and preventing particles, liquids or any substance harmful for the correct operation thereof from entering the integrated sensor (2) area. This is because the sealed meter (2a) consists of at least one housing cavity (2b) capable of inserting at least one sealing element (6). These sealing elements (6) can be sealing gaskets (6a) or elastic membranes (6b), depending on different variables such as; the size of the gas spring (1) and its integrated sensor (2) or the working pressure of the gas, etc., and be located facing the front face or at the perimeter of the integrated sensor (2). The dimensions and number of sealing elements (6) will depend on the size of the integrated sensor (2) to provide proper sealing thereof depending on the variables already outlined.

As can be seen in the execution presented in figure 3, no manipulation is required by the user when introducing or removing the die from the press each time the extraction and subsequent analysis of the data of the measured variables is required, ensuring the integrity of the gas spring (1), since the connector (3) linked to the communication cable (8) is capable of connection with the wireless unit (10). Thus, the present invention allows the portability and adaptation of the wireless unit (10) to the conditions of the workspace, giving the present invention high usability.

Lastly, as can be seen in figure 4, another advantageous technical characteristic of the present invention is that the fixing ring (5), represented in figure 2, achieves additional security and a correct and efficient fixing of the integrated sensor (2) in the fixing cavity (4) avoiding a detachment thereof thanks to the fact that the fixing cavity (4) of the base wall (1d) of the cylinder (1c) is capable of housing a fixing ring (5). As an alternative in the fixing of the integrated sensor (2) in the fixing cavity (4a), the possibility is provided that there are threaded walls (4a) in the fixing cavity (4) of the base wall (1) of the cylinder (1c), which are adapted to the perimeter of the connector (3) and/or integrated sensor (2), presenting the threading corresponding to these, which will allow the incorporation of the sensor (2) in the fixing cavity (4) also by threading, although it can occur by any other common means such as elastic deformation or clipping.

Variations in materials, shape, size and arrangement of the component elements, described in a non-limiting manner, do not alter the essentiality of this invention, this being sufficient to proceed to its reproduction by an expert.

## Claims

1. Gas spring (1) with integrated sensor (2) consisting of a movable piston (1a), a gas chamber (1b) and a cylinder (1c) **characterized in that** it consists of a measurement duct (1e) linked to the gas chamber (1b) and capable of incorporating an integrated sensor (2) which in turn is housed in the fixing cavity (4) of the base wall (1d) of the cylinder (1c) and consisting of the integrated sensor (2) of a sealed meter (2a) and a connector (3) capable of being linked with the communication cable (8).

2. Gas spring (1) with integrated sensor (2), according to claim 1, **characterized in that** The sealed meter (2a) consists of at least one housing cavity (2b) capable of inserting at least one sealing element (6).

3. Gas spring (1) with integrated sensor (2), according to all the previous claims, **characterized in that** the connector (3) linked to the communication cable (8) is capable of connection with the central data unit (7).

4. Gas spring (1) with integrated sensor (2), according to all the previous claims, **characterized in that** the connector (3) linked to the communication cable (8) is capable of connection with the wireless unit (10).

5. Gas spring (1) with integrated sensor (2), according to all the previous claims, **characterized in that** the fixing cavity (4) of the base wall (1d) of the cylinder (1c) is capable of housing a fixing ring (5).
